# FASCICULE DE BREVET EUROPEEN

(11) **EP 3 156 843 B1**
(45) Date de publication et mention de la délivrance du brevet: **18.04.2018**
(21) Numéro de dépôt: 16020393.1
(22) Date de dépôt: 11.10.2016
(51) Int. Cl.: G03B 13/20, G01C 11/02, G01B 11/25, G03B 35/08, G06T 7/60, G06T 17/00, G06T 19/00, H04N 5/225, H04N 13/02, H04N 13/00

(54) **DISPOSITIF ET PROCÉDÉ POUR RECONSTRUIRE EN TROIS DIMENSIONS LA TÊTE ET LE CORPS**
VORRICHTUNG UND VERFAHREN ZUR DREIDIMENSIONALEN REKONSTRUKTION VON KOPF UND KÖRPER
DEVICE AND METHOD FOR THREE-DIMENSIONAL RECONSTRUCTION OF THE HEAD AND BODY

(30) Priorité: 14.10.2015 FR 1502170
(43) Date de publication de la demande: 19.04.2017
(73) Titulaire: QuantifiCare S.A., 06560 Valbonne (FR)
(72) Inventeur: THIRION, Jean-Philippe, 06560 Valbonne (FR)
(74) Mandataire: Decobert, Jean-Pascal

(56) Documents cités:
- FR-A1- 2 763 709
- FR-A1- 2 910 648
- US-A- 5 355 253
- US-A1- 2011 228 043
- "Exhibition Watch Report - In-Cosmetics 2013", , 1 janvier 2013 (2013-01-01), XP055139703, Paris Extrait de l'Internet: URL:http://www.veillesalon.com/rapports-do c/In-Cosmetics/Rapport_In-Cosmetics-2013.p df [extrait le 2014-09-11]

## Description

La présente invention concerne un dispositif de préférence portable de stéréophotogrammétrie et un procédé pour l'acquisition, la reconstruction et la mesure de caractéristiques et des variations en trois dimensions de la surface de la tête et du corps.

En chirurgie plastique, il est nécessaire de pouvoir reconstruire en trois dimensions la surface d'une partie du corps afin de mesurer les caractéristiques géométriques des sujets, d'analyser leurs formes, de simuler des opérations chirurgicales et également d'acquérir des surfaces 3D du corps au cours du temps afin de les comparer et d'en mesurer les variations géométriques.

Les chirurgiens plasticiens sont particulièrement intéressés par la surface du visage pour les opérations de type rhinoplastie ou pour des opérations de type « lifting » et par la surface de la poitrine et des seins pour des opérations de chirurgie mammaire. Les chirurgiens sont également intéressés par d'autres zones du corps comme le fessier, les hanches, le cou, la région du sternum, les mains et d'autres régions encore. On remarquera que ces besoins nécessitent des variations importantes de la taille du champ de prise de vue. La surface d'un torse complet est bien plus importante que la surface d'un visage.

La stéréophotogrammétrie consiste à recueillir les images d'un sujet selon au moins deux angles de vue différents au moyen d'un appareil de prise de vue calibré, c'est-à-dire dont la géométrie de l'optique est parfaitement connue. Quand deux images sont acquises simultanément, on parle d'une paire stéréoscopique ou « paire stéréo » et en trouvant des points de correspondance entre les deux images de la paire stéréo par des algorithmes de type corrélation, il est possible par triangulation de reconstruire une représentation dense en trois dimensions de la surface de l'objet examiné.

La calibration de l'optique est une des étapes clés nécessaires à une reconstruction précise en trois dimensions. La précision géométrique à atteindre pour la fabrication de l'optique est telle qu'il n'est pas possible en pratique d'avoir des pièces mobiles dans ces optiques, ce qui signifie que les appareils de stéréophotogrammétrie utilisés pour la reconstruction de surfaces anatomiques ont un plan de focalisation fixe, définissant, au moyen d'une ouverture, un champ de profondeur fixe autour du plan de focalisation. Ceci se traduit par un champ de prise de vue fixe. Ainsi, l'homme de l'art utilisera un système optique ayant une distance de focalisation correspondant à un champ de prise de vue approximativement équivalent à un format A4 pour les prises de vue du visage. Il utilisera un second système optique correspondant à un champ de prise de vue approximativement équivalent à un format A3 pour les prises de vue de la poitrine. Ceci fait qu'en pratique, l'homme de l'art utilisera deux appareils distincts pour l'acquisition d'une part des visages et de l'autre de la poitrine et des seins.

Il convient de munir le système de prise de vue d'un moyen de positionner le sujet à la distance correspondant au plan de focalisation. Une manière d'obtenir cette distance fixe de repositionnement consistera à utiliser un système de stéréophotogrammétrie portable tel que celui décrit dans « MAVIS: a non-invasive instrument to measure area and volume of wounds. Measurement of Area and Volume Instrument System.», Plassmann P, Jones TD, Med Eng Phys 1998;20(5):332-8. Ce système de stéréophotogrammétrie est muni d'une paire de projecteurs lumineux convergeant à la distance de focalisation de l'appareil de prise de vue.

Dans le cas d'une surface anatomique courbe telle que le visage ou la poitrine, certaines parties importantes ne sont pas visibles simultanément par les deux optiques du système de stéréophotogrammétrie à cause de la courbure du sujet et ceci quelle que soit la largeur de champ de l'appareil. En conséquence, certaines parties du sujet ne peuvent pas être reconstruites en trois dimensions à partir d'une seule prise de vue stéréo. C'est pour cette raison que des systèmes statiques multi-têtes ont été développés afin de pouvoir prendre simultanément plusieurs prises de vue stéréo différentes du même sujet, de manière à couvrir les angles morts. En calibrant la position des différentes têtes grâce à des mires, il est possible de rapiécer les différentes surfaces reconstruites pour obtenir une seule surface sans partie cachée de la tête ou de la poitrine du sujet. Cette technique de rapiéçage, très délicate et difficile à réaliser, est appelée « stitching » en anglais. Elle a été initialement utilisée pour rapiécer différentes photographies classiques en deux dimensions afin de reconstruire des panoramas à partir de plusieurs prises de vue, puis a été étendue aux surfaces 3D et à leur textures respectives pour fabriquer une seule représentation de la surface 3D à partir de plusieurs morceaux de surface 3D différents. Typiquement, ces systèmes statiques multi-têtes utilisent trois à quatre têtes stéréo en fonction des applications.

Le LifeViz II, tel que décrit dans « Exhibition Watch Report - In-Cosmetics 2013», 2013, XP055139703, Paris, page 8 et 9, est un système auquel a contribué l'auteur de la présente invention et qui comporte d'une part un appareil de stéréophotogrammétrie portable avec pointeurs lumineux et de l'autre des moyens de calcul permettant de rapiécer les surfaces obtenues pour différentes prises de vue stéréo afin de reconstruire en trois dimensions la surface complète d'un visage ou de la poitrine. La difficulté résolue par ce système portable a été de pouvoir rapiécer différentes prises de vue acquises à des instants différents et selon des angles qui ne sont pas parfaitement connus, au contraire des systèmes fixes multi-têtes pour lesquels les différentes prises sont obtenues au même instant et les positions relatives des têtes sont parfaitement connues par calibration. Pour la mise au point du LifeViz II, il a été nécessaire de développer de nouveaux algorithmes de mise en correspondance de surfaces permettant de retrouver automatiquement les angles inconnus de prise de vue, de fusionner des cartes de texture prises avec des éclairages différents et des surfaces ayant pu se déformer légèrement entre les différentes prises de vue à cause de légers déplacements ou déformations du sujet entre chaque prise. Le système LifeViz II constitue l'état de l'art dans le domaine des systèmes portables de stéréophotogrammétrie. Il reste limité par le fait qu'à la fabrication, il doit être optimisé pour une distance fixée de prise de vue. Ainsi, il existe des modèles d'appareils de stéréophotogrammétrie optimisés pour la reconstruction du visage et pour lesquels le champ de prise de vue est approximativement de la taille d'un format A4, et d'autres modèles optimisés pour la reconstruction du torse et pour lesquels le champ de prise de vue est approximativement de la taille d'un format A3.

En effet, avec un champ de prise de vue approximativement d'une taille correspondant au format A4, le visage peut être couvert en trois ou quatre prises. Avec un champ restreint au format A4 et comme avec un appareil portable il est nécessaire de disposer d'un recouvrement important des différentes surfaces pour les mettre en correspondance, l'utilisation pour le torse nécessiterait en pratique un nombre trop important de prises A4 différentes, qui seraient de plus difficiles à positionner dans l'espace les unes par rapport aux autres. En disposant d'un système avec un champ de prise de vue correspondant au format A3 et pour éviter les parties cachées, on peut couvrir la surface d'un torse au moyen de trois à cinq prises avec une définition relativement simple de positionnement.

S'il on dispose d'un appareil portable ayant un champ de prise de vue au format A3, on peut également acquérir avec le même système des images pour la reconstruction du visage, mais alors la résolution d'image est bien moins bonne qu'avec un système dédié au visage car dans un champ au format A3, la surface utilisée dans l'image pour représenter le visage est très petite et l'on perd ainsi beaucoup de pixels devenus inutiles.

En conclusion, les appareils de stéréophotogrammétrie portables développés actuellement ne comportent qu'une seule distance nominale de prise de vue qui est optimisée soit pour le visage, soit pour le torse, mais qui n'est pas optimisée pour ces deux applications en même temps. L'homme de l'art voulant utiliser un système portable pour les deux applications, tête et torse, simultanément, utilisera un système optimisé pour le torse qui fera perdre de la précision lorsqu'il cherchera à reconstruire des surfaces de visage.

Le but de la présente invention est de remédier à ce problème grâce à un dispositif de stéréophotogrammétrie de préférence portable et un procédé utilisant ce dispositif optimisé pour deux distances différentes de prise de vue. L'appareil peut avantageusement être porté par un utilisateur et par exemple peser moins de deux kilogrammes.

Le dispositif de stéréophotogrammétrie comme définit dans la rev. indépendante 1, est apte à être porté et composé d'un appareil de prise de vue munie d'une optique double permettant d'obtenir deux prises de vue simultanées selon un angle différent. Il dispose de plus d'un système de mesure de distance possédant au moins deux distances prédéfinies distinctes pour la prise de vue.

Il sera avantageux que ces deux distances prédéfinies soient comprises dans la partie de l'espace pour laquelle la mise au point de l'image est nette, c'est-à-dire que les positions de repositionnement du sujet soit à l'intérieur de la profondeur de champ de l'appareil de stéréophotogrammétrie.

L'optique double du système de stéréophotogrammétrie pourra être réalisée de différentes manières sans que cela n'impacte la nature de l'invention du moment qu'elle garantit une grande profondeur de champ. L'optique double pourra comprendre un système de lentilles et un séparateur d'images fabriqué à partir d'un jeu de miroirs. Dans ce cas, il sera avantageux de disposer d'un jeu de deux miroirs secondaires permettant de recueillir chacun une prise de vue suivant un angle légèrement différent et renvoyant chacun leur image du sujet sur un jeu correspondant et opposé de deux miroirs primaires renvoyant chacun son image sur une surface photosensible au travers d'un système de lentilles. Ce système de lentilles pourra être unique ou dédoublé, avec un sous-système de lentilles différent pour chacune des images de la paire stéréo ou un seul système de lentilles recevant les deux images issues des miroirs primaires. Alternativement, l'optique double pourra comprendre deux systèmes optiques séparés tels que deux objectifs différents renvoyant chacun une prise de vue acquise suivant un angle différent sur une surface photosensible unique ou dédoublée.

Dans une variante de l'invention, le système de mesure de distance sera composé d'au moins deux paires de projecteurs lumineux, chaque paire de projecteurs convergeant à une distance différente. Ainsi, en plaçant le sujet de telle manière à superposer les motifs lumineux projetés par une première paire de projecteurs lumineux, on réalise la première distance de prise de vue et en plaçant le sujet de façon à superposer les motifs lumineux projetés par une seconde paire de projecteurs lumineux, on réalise la seconde distance de prise de vue.

Dans une autre variante de l'invention, le système de mesure de distance sera composé d'une paire de projecteurs lumineux dont la distance de convergence est réglable de telle manière à ce qu'en changeant les réglages de convergence l'utilisateur est apte à faire converger les deux projecteurs lumineux à au moins deux distances différentes. L'avantage d'un tel système est que la définition de la distance de prise de vue peut s'effectuer par réglage au moment de l'utilisation pour beaucoup plus de distances prédéfinies possibles et donc n'est pas figée à seulement deux distances à la fabrication du dispositif comme dans le cas de deux paires de projecteurs lumineux fixes. L'inconvénient par rapport à deux paires distinctes de projecteurs lumineux est qu'il est plus difficile dans ce cas de s'assurer de la reproductibilité du réglage en position car avec un dispositif réglable il peut exister un risque d'obtenir involontairement des positions intermédiaires.

Dans une autre variante encore de l'invention, le système de mesure de distance sera composé d'une paire de projecteurs lumineux dont les motifs sont superposables à deux distances différentes. Il pourra s'agir par exemple de deux taches lumineuses projetées par chacun des projecteurs, les taches lumineuses les plus externes des deux projecteurs permettant de réaliser la distance de repositionnement la plus lointaine et les taches lumineuses les plus internes des deux projecteurs permettant de réaliser la distance de repositionnement la plus proche du sujet. D'autres motifs lumineux peuvent être envisagés et il existera un avantage à pouvoir distinguer les superpositions de motifs pour les deux positions par des aspects de couleur ou de forme des motifs projetés. Ainsi par exemple, les motifs intérieurs pourront être circulaires et les motifs extérieurs en forme de croix, ou bien encore les motifs intérieurs être d'une couleur et les motifs extérieurs d'une autre. Dans cette variante de l'invention, l'avantage est de disposer d'une seule paire de projecteurs lumineux sans réglages. Son inconvénient par rapport à deux paires séparées de projecteurs lumineux est le risque de confusion dans l'utilisation des motifs projetés.

Une autre variante encore de l'invention est de disposer d'un système de télémétrie permettant de définir au moins deux distances différentes. Il existe de nombreuses façons de réaliser un tel télémètre, basé sur l'utilisation de l'infrarouge, des ondes radar, ou bien encore sur le principe de l'interférométrie. Le système de télémétrie pourra inclure l'affichage de la distance mesurée, permettant ainsi le placement du sujet à des distances nominatives prédéfinies. Le système de télémétrie pourra également contenir un système de programmation permettant le déclanchement d'un signal quand l'une des au moins deux distances prédéfinies est réalisée. Ce signal est à comprendre au sens large est pourra être un signal sonore et/ou un signal visuel, ou bien encore un signal électromagnétique pouvant éventuellement servir à déclencher la prise de vue quand la distance prédéfinie souhaitée est réalisée. Le signal visuel pourra être l'allumage ou l'extinction d'une lumière ou bien encore le clignotement ou le non-clignotement de la mesure affichée par le télémètre ou tout autre signal visuel.

Dans toutes ces variantes de l'invention, il pourra être avantageux de disposer d'un commutateur permettant de sélectionner l'une des au moins deux distances prédéfinies de prise de vue. Ainsi, dans le cas de deux paires de projecteurs lumineux, le commutateur permettra d'activer dans une première position l'allumage d'une des deux paires et d'activer dans une seconde position l'allumage de la seconde paire de projecteurs lumineux. Il pourra être avantageux de disposer d'une troisième position du commutateur permettant l'extinction des deux paires de projecteurs, encore appelée position « de repos » du système. Dans le cas d'un télémètre, le commutateur pourra permettre de sélectionner l'une ou l'autre parmi les au moins deux positions prédéfinies programmées sur le télémètre et dans ce cas également il pourra être avantageux de disposer d'une troisième position du commutateur provoquant l'extinction du télémètre.

Dans le cas de l'utilisation d'un commutateur et si l'appareil de stéréophotogrammétrie est muni d'un flash, il sera également avantageux d'adapter la puissance du flash au moyen du commutateur de sorte que si la distance la plus courte des au moins deux distances prédéfinies est utilisée alors la puissance du flash est réduite et si la distance la plus longue des au moins deux distances prédéfinies est utilisée alors la puissance du flash est augmenté afin que l'intensité lumineuse des images prises à la distance courte ou à la distance longue soit comparables. L'avantage de cette variante de l'invention est de permettre de sélectionner la distance de prise de vue au moyen d'un seul commutateur sans avoir par exemple à adapter manuellement les ISO du boitier photographique de l'appareil pour rendre ces intensités similaires.

Dans une variante de l'invention particulièrement utile dans le cas des applications en chirurgie plastique ou en dermatologie esthétique, il pourra être avantageux de régler les au moins deux distances de prises de vue de sorte qu'une de ces distances corresponde à un champ de prise de vue proche pour l'une des distances de la taille d'un format papier de type A4, c'est-à-dire une largeur et une hauteur de la prise de vue à la distance nominale de prise de vue de 29,7cm par 21cm et pour l'autre des distances d'un champ de prise de vue proche d'un format papier de type A3, c'est-à-dire 42cm par 29,7cm. En effet, un champ approximatif de type A4 est parfaitement adapté à la prise de vue de visages, alors qu'un champ approximatif de type A3 est lui parfaitement adapté à la prise de vue de parties du corps et en particulier du torse.

L'un des challenges technologiques dans le cas de la présente invention est de réaliser un dispositif de stéréophotogrammétrie dont la profondeur de champ, c'est-à-dire la distance séparant les deux plans entre lesquels l'image du sujet est nette, soit apte à couvrir les au moins deux distances prédéfinies de prise de vue. En effet, comme indiqué en préambule, la précision de la calibration des systèmes optiques nécessaire à la stéréophotogrammétrie est généralement telle que les pièces du système optique sont nécessairement fixes ce qui entraine une position fixe du plan de focalisation du dispositif. Afin de réaliser une profondeur de champ suffisante pour obtenir une image nette à la distance correspondant au champ de prise de vue équivalent au format A4 et en même temps une image encore nette à la distance correspondant au champ de prise de vue équivalent au format A3, une variante de l'invention utilise avantageusement deux jeux séparés de lentilles, avec un jeu distinct de lentilles pour chaque sous-optique de l'optique double, chaque jeu de lentilles étant constitué de trois lentilles alignées correspondant, dans le sens du trajet optique des rayons lumineux entrant dans l'appareil de prise de vue, à une lentille plan-convexe, d'une lentille double-concave et d'une lentille formant un doublet achromatique. Dans nos expériences, cette composition de lentilles s'est montrée particulièrement avantageuse afin de réaliser une profondeur de champ compatible à la fois avec des vues proches d'un format A4 et des vues proches d'un format A3.

Le procédé suivant l'invention consiste à mettre en oeuvre comme définit dans la rev. indépendante 14, le dispositif suivant l'invention en plaçant, selon le choix de l'opérateur, le sujet à l'une des au moins deux distances prédéfinies de prise de vue, puis en réalisant une ou plusieurs prises de vue à cette distance prédéfinie.

Une variante de ce procédé consiste pour l'utilisateur à actionner un commutateur permettant de sélectionner l'une parmi les au moins deux distances de prise de vue prédéfinies avant de positionner le sujet à la distance de prise de vue sélectionnée.

Dans le cas de l'utilisation de deux paires de pointeurs lumineux, l'utilisateur activera à son choix l'une des deux paires de projecteurs, puis placera le sujet de sorte que les deux motifs lumineux projetés par les projecteurs convergent en un point situé sur la surface du sujet. L'utilisateur pourra au choix faire reculer ou avancer le sujet ou reculer ou avancer le dispositif de stéréophotogrammétrie afin de réaliser cette superposition, puis prendre une ou plusieurs prises de vue à cette distance prédéfinie du sujet.

Dans le cas d'une seule paire de projecteurs lumineux disposant d'un réglage de la convergence des projecteurs, l'utilisateur règlera la distance souhaitée parmi les aux moins deux distances prédéfinies avant de placer relativement le sujet et l'appareil de stéréophotogrammétrie puis de déclencher la prise de vue.

Dans le cas d'une seule paire de projecteurs lumineux disposant de plusieurs motifs par projecteur lumineux, l'utilisateur placera relativement le sujet par rapport à l'appareil de prise de vue de façon à réaliser la superposition d'un motif commun ou complémentaire provenant de chacun des deux projecteurs lumineux.

Dans le cas de l'utilisation d'un télémètre, l'utilisateur placera relativement le sujet et le dispositif de stéréophotogrammétrie de façon à ce que le télémètre affiche l'une parmi les au moins deux distances prédéfinies de mise au point. Il sera avantageux de munir le télémètre d'un système de programmation de la distance permettant l'activation d'un signal lorsque la distance souhaitée est réalisée. Ainsi, l'utilisateur programmera dans un premier temps la distance du télémètre pour l'une des au moins deux distances prédéfinies, puis placera relativement le sujet et le dispositif de stéréophotogrammétrie jusqu'à l'activation du signal du télémètre marquant la réalisation de la distance sélectionnée et enfin l'utilisateur activera la prise de vue au moment où il reçoit ou perçoit ce signal. Dans une variante astucieuse du procédé, le dispositif de stéréophotogrammétrie est déclenché automatiquement par le signal marquant la réalisation de la distance du télémètre préprogrammée parmi l'une des au moins deux distances prédéfinies de prise de vue.

Dans une variante du procédé et après qu'une ou plusieurs prises de vue en stéréophotogrammétrie ont été réalisées pour l'une des au moins deux distances prédéfinies de prise de vue, un programme d'ordinateur est utilisé avantageusement pour déterminer en trois dimensions la ou les surfaces du sujet correspondant à cette ou à ces prises de vues. Un programme d'ordinateur est ensuite avantageusement utilisé pour mettre en correspondance les différentes surfaces reconstruites en trois dimensions, et enfin un programme d'ordinateur est avantageusement utilisé pour rapiécer (on traduira par « stitcher » en anglais) les différentes surfaces et réaliser au final une seule représentation tridimensionnelle du sujet pris à cette distance.

De préférence, un même programme comprend des instructions pour les différentes étapes précitées. Le procédé pourra employer un ordinateur doté d'au moins un processeur et d'une mémoire non transitoire pour le stockage du ou des programmes.

Dans une variante particulière du procédé, l'utilisateur pourra choisir entre :
- sélectionner la position correspondant à un format approximatif A4, puis réaliser plusieurs prises de vue de la tête du sujet à cette distance, puis un programme d'ordinateur détermine en trois dimensions les surfaces correspondantes et enfin met en correspondance et rapièce les différentes surfaces pour obtenir une seule représentation en trois dimension de la tête du sujet.
- Ou bien sélectionner la position correspondant à un format approximatif A3, puis réaliser plusieurs prises de vue du corps du sujet à cette distance, puis un programme d'ordinateur détermine en trois dimensions les surfaces correspondantes et enfin met en correspondance et rapièce les différentes surfaces pour obtenir une seule représentation en trois dimension du corps du sujet.

Dans une variante plus spécifique encore du procédé pour lequel l'une des au moins deux distances de prise de vue correspond à un champ de prise de vue proche d'un format A4 et l'autre correspond à un champ de prise de vue proche d'un format A3, il y aura un intérêt à ce que :
- lorsque l'utilisateur sélectionne la distance correspondant au format A4 il prenne alors trois ou quatre prises de vue du visage, la première prise de vue se faisant de face, une seconde prise de vue se faisant d'un côté du visage et légèrement au-dessous, une troisième prise de vue se faisant de l'autre côté du visage et légèrement au-dessous et la quatrième prise de vue, optionnelle, se faisant face au sujet mais par le dessous.
- lorsque l'utilisateur sélectionne la distance correspondant au format A3, il prenne alors trois ou quatre prises de vue du torse, la première se faisant de face, la seconde de côté et sur le dessous afin de bien imager le pli infra-mammaire d'un des seins du sujet et la troisième de l'autre côté et sur le dessous afin de bien imager le pli infra-mammaire de l'autre sein. Une quatrième prise de vue, optionnelle étant prise de face mais au-dessus et tournée de 90° afin de pouvoir imager le dessus des épaules dans toute leur largeur.

Nous avons déterminé un avantage particulier à utiliser ces protocoles 3 ou 4 vues format A4 pour la reconstruction du visage et 3 ou 4 vues format A3 pour la reconstruction du torse et des seins, ce qui couvre particulièrement bien également les autres domaines principaux d'applications visés en chirurgie plastique.

L'avantage de l'invention est ainsi de pouvoir disposer d'un seul dispositif de stéréophotogrammétrie portable qui est optimisé à la fois pour la prise de vue du visage et pour la prise de vue du torse. Il s'oppose en cela aux systèmes mobiles existants, qui ne possèdent qu'une seule distance nominale de positionnement du sujet. En couvrant ces deux parties anatomiques pour des surfaces très différentes, ces mêmes dispositif et procédé permettent de reconstruire de nombreuses autres parties du corps allant de la surface d'une main à celle du torse complet et même au-delà.

Les dessins annexés illustrent l'invention :

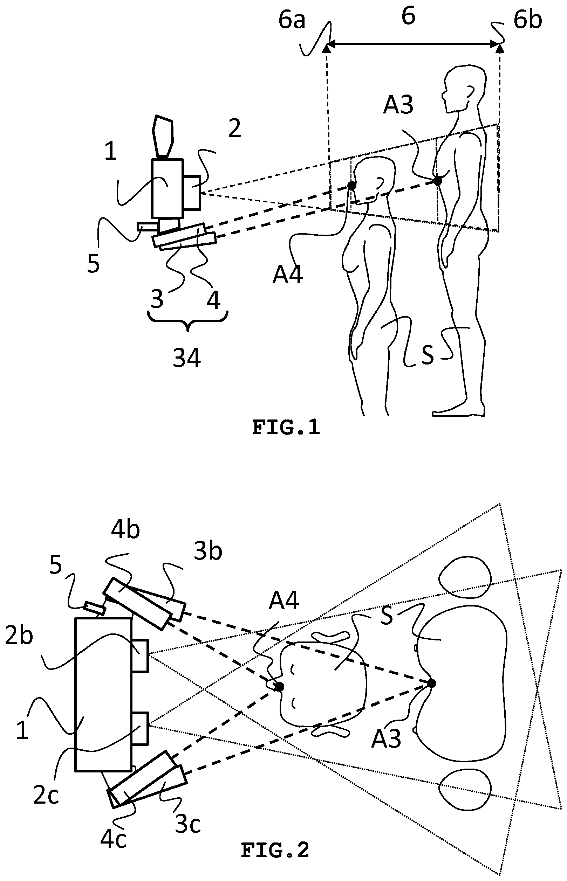

- La figure 1 présente l'invention suivant une vue de côté.
- La figure 2 présente l'invention suivant une vue de dessus.
- La figure 3 présente une variante de l'invention comprenant une paire de projecteurs lumineux dont la distance de convergence est réglable.
- La figure 4 présente une variante de l'invention dans laquelle une paire de projecteurs lumineux projetant chacun plusieurs motifs est utilisée.
- La figure 5 présente une variante de l'invention dans laquelle un télémètre est utilisé pour réaliser l'une ou l'autre des au moins deux distances prédéfinies.
- La figure 6 présente une variante de l'invention permettant la réalisation d'une double-optique possédant une très grande profondeur de champ.

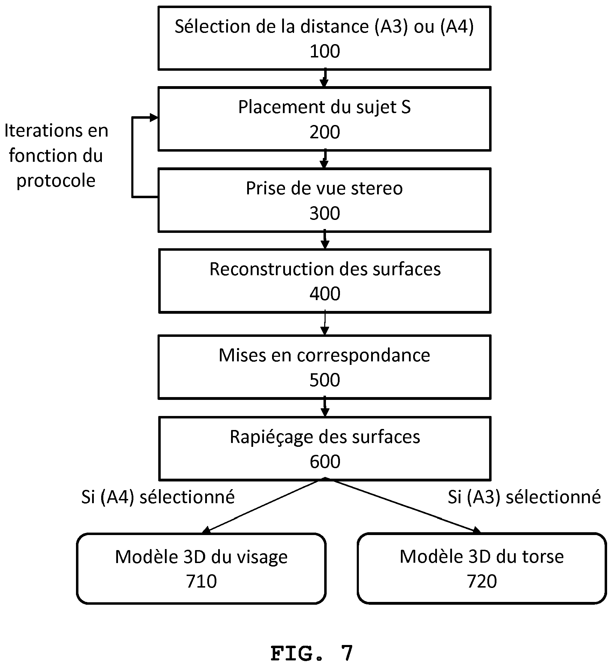

- La figure 7 présente un procédé suivant l'invention permettant de prendre des prises de vues de sujet à deux distances différentes prédéfinies.
- La figure 8 présente les angles de prise de vue optimisés pour le visage utilisant un champ de prise de vue proche d'un format A4.
- La figure 9 présente les angles de prise de vue optimisés pour le torse utilisant un champ de prise de vue proche d'un format A3.

En référence à ces dessins, le dispositif se compose :
- Du corps d'un appareil de prise de vue (1)
- D'une optique double (2) montée sur le corps de l'appareil (1) et constituée de deux sous-optiques (2b) et (2c) permettant la réalisation d'une paire stéréoscopique correspondant à deux angles de prise de vue légèrement différents.
- De moyens de mesure de distance (34) permettant de définir au moins deux distances de prise de vue distinctes correspondant aux positions (A3) et (A4) dans l'espace s'étendant devant l'appareil de prise de vue.

Il sera avantageux pour la réalisation du dispositif que les positions (A3) et (A4) soient contenues entre le plan (6a) et le plan (6b) qui définissent la profondeur de champs (6), c'est-à-dire la distance de l'espace pour laquelle les images de la paire stéréo sont nettes, (6a) étant le plan le plus proche du dispositif de stéréophotogrammétrie pour lequel l'image commence à être nette et (6b) étant le plan le plus éloigné du système de stéréophotogrammétrie pour lequel l'image est encore nette.

Dans une variante particulière de l'invention, les moyens de mesure de distance (34) sont constitués par deux paires de projecteurs lumineux, de sorte que la première paire de projecteurs lumineux (3b) et (3c) converge en un point (A3) et la seconde paire de projecteurs lumineux (4b) et (4c) converge vers un second point (A4). Il sera avantageux dans ce cas de disposer d'un commutateur (5) permettant, au choix de l'utilisateur, de déclencher l'allumage :
- de la paire de projecteurs lumineux (3b) et (3c),
- de la paire de projecteurs lumineux (4b) et (4c).

Il y aura un avantage également à ce qu'une troisième position du commutateur (5), dite « position de repos », permette l'extinction de tous les projecteurs lumineux.

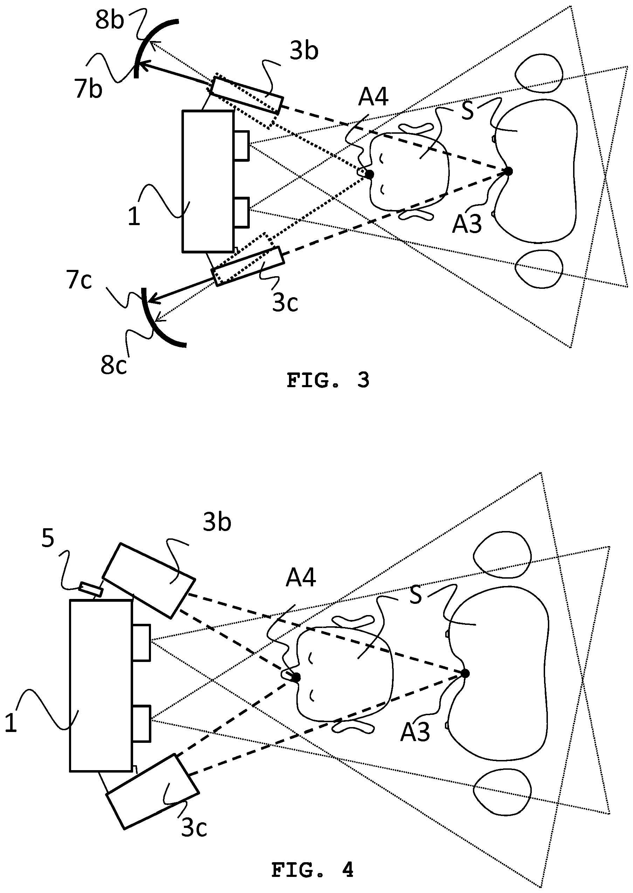

Dans une autre variante de l'invention, les moyens de mesure (34) seront constitués d'une paire de projecteurs lumineux (3b) et (3c) dont la distance de convergence est réglable, de telle manière à ce qu'en changeant les réglages de convergence, l'utilisateur puisse assurer la convergence des deux projecteurs lumineux à l'une des au moins deux distances prédéfinies différentes (A4,A3). Une manière possible de réaliser des projecteurs réglables en ce qui concerne leur point de convergence, illustrée par la figure 3, est de munir chaque projecteur d'un axe de rotation, d'un rapporteur semi-circulaire et d'une tige de positionnement solidaire du projecteur lumineux et de prévoir pour chaque projecteur deux positions de blocage sur le rapporteur associé, respectivement (7b) et (8b) pour le projecteur lumineux (3b), et (7c) et (8c) pour le projecteur lumineux (3c), de sorte que :
- lorsque la tige de positionnement du projecteur (3b) est bloquée en position (7b) et la tige de positionnement du projecteur (3c) est bloquée en position (7c) alors les projecteurs lumineux (3b) et (3c) convergent au point (A3)
- et de sorte que lorsque la tige de positionnement du projecteur (3b) est bloquée en position (8b) et la tige de positionnement du projecteur (3c) est bloquée en position (8c), alors les projecteurs lumineux (3b) et (3c) convergent au point (A4).

Dans une autre variante encore de l'invention, les moyens de mesure (34) sont constitués d'une paire de projecteurs lumineux (3b) et (3c) dont les motifs lumineux sont superposables à deux distances différentes. Dans la variante selon la figure 4, chaque projecteur lumineux émet un motif composé de deux points lumineux, l'un interne et l'autre externe, de sorte qu'en réalisant la superposition des points lumineux externes, on matérialise la position du point (A3) et de sorte qu'en réalisant la superposition des points lumineux internes, on réalise la position du point (A4). Comme indiqué dans la description, il y aura un intérêt à distinguer les motifs internes des motifs externes par des couleurs ou des formes de motifs différentes.

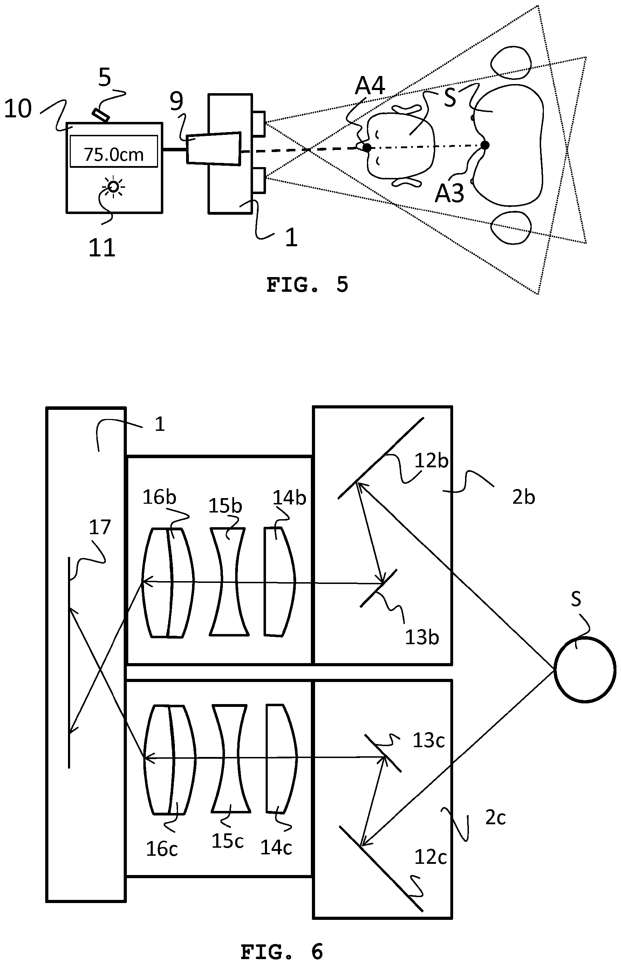

Dans une autre variante encore de l'invention les moyens de mesure (34) sont constitués d'un système de télémétrie permettant de définir une parmi au moins deux distances prédéfinies différentes. Selon l'implémentation présentée dans la figure 5, un télémètre (9) est placé sur le corps d'appareil de prise de vue (1). Les moyens de prise de vue (34) peuvent contenir un écran (10) affichant la distance entre le télémètre (9) et le sujet (S), et le télémètre peut être muni d'un commutateur (5) de sorte qu'une première position du commutateur (5) permette le déclanchement d'un signal (11) lorsque la distance (A4) est réalisée et de sorte qu'une seconde position du commutateur (5) permette le déclanchement d'un signal (11) lorsque la distance (A3) est réalisée. Dans d'autres variantes encore de réalisation utilisant un télémètre, celui-ci pourra ne pas disposer de commutateur mais plutôt de manières différentes de signaler la réalisation de la distance (A4) ou de la distance (A3) au moyen par exemple de couleurs différentes dans le cas d'un signal visuel ou bien de sons différents dans le cas d'un signal sonore ou bien encore de tout autre manière de distinguer la réalisation de l'une ou de l'autre des au moins deux distances prédéfinies.

Dans tous les cas de réalisation où le dispositif contient un commutateur (5) et si le dispositif dispose d'un flash, il sera avantageux que ce commutateur servent également à adapter la puissance lumineuse du flash de sorte que si la distance la plus courte des aux moins deux distances prédéfinies est utilisée alors la puissance du flash est réduite et si la distance la plus longue des aux moins deux distances prédéfinies est utilisée alors la puissance du flash est augmentée de sorte que l'intensité lumineuse des images prise à la distance courte ou à la distance longue soient similaires. Cela peut être réalisé par un circuit intégré piloté par le commutateur pour contrôler la tension de charge des condensateurs du flash et l'adapter à la distance sélectionnée. Dans ce cas également il y aura un avantage à ce que les intensités lumineuses des images d'une surface blanche prises à au moins deux des au moins deux distances prédéfinies de prise de vue soient identiques ou différentes de moins de 10%. On entend par intensité lumineuse pour chaque image de la surface blanche la valeur d'intensité de l'image correspondant au pic principal de l'histogramme de cette image.

Dans une variante de l'invention particulièrement utile en chirurgie plastique ou en dermatologie esthétique, il sera avantageux que la distance la plus proche (A4) soit telle que l'intersection de la pyramide de prise de vue correspondant à l'une des sous-optique (2b) ou (2c) avec le plan perpendiculaire à l'axe de prise de vue et passant par le point de positionnement (A4) corresponde à une surface qui soit approximativement celle d'un format normalisé A4 et que la distance la plus lointaine (A3) soit telle que l'intersection de la pyramide de prise de vue correspondant à l'une des sous-optique (2b) ou (2c) avec le plan perpendiculaire à l'axe de prise de vue et passant par le point de positionnement (A3) corresponde à une surface qui soit approximativement celle d'un format normalisé A3.

Afin de préciser les rapports de distances, il sera avantageux que la surface du champ de prise de vue correspondant à la plus courte (A4) des au moins deux distances de prise de vue (A4,A3) soit inférieure d'au moins 25% en surface à la surface du champ de prise de vue correspondant à la plus longue (A3) des au moins deux distances de prise de vue (A4,A3). Il y aura un avantage dans ce cas à ce que la surface du champ de prise de vue correspondant à la plus courte (A4) des au moins deux distances de prise de vue (A4, A3) soit égale à la surface d'un format A4, c'est-à-dire 21cm x 29,7cm à plus ou moins 40% près et que la surface du champ de prise de vue correspondant à la plus longue (A3) des au moins deux distances de prise de vue (A4,A3) soit égale à la surface d'un format A3, c'est-à-dire 29,7cm x 42cm à plus ou moins 40% près.

Selon une variante de l'invention particulièrement avantageuse en ce qu'elle permet la réalisation d'un système optique ayant une très grande profondeur de champ (6) et illustrée de façon indicative par la figure 6, le dispositif de stéréophotogrammétrie pourra être basé sur un séparateur lumineux de sorte que chacune des sous-optiques (2b,2c) soit équipée d'un jeu de deux miroirs opposés et de trois lentilles alignées tel qu'un miroir extérieur appelé miroir secondaire (12b, 12c) reçoive l'image du sujet (S) pour la renvoyer sur un miroir intérieur opposé appelé miroir primaire (13b, 13c) qui renvoie lui-même l'image au travers d'une première lentille de type plan-convexe (14b, 14c), puis au travers d'une seconde lentille de type double-concave (15b, 15c), puis au travers d'une troisième lentille de type doublet achromatique (16b, 16c) afin que cette image atteigne une surface photosensible (17) placée à l'intérieur du corps de l'appareil de prise de vue (1), les deux images rassemblées du sujet (S) par les deux sous-optiques (2b, 2c) constituant ainsi la paire stéréo acquise par l'appareil.

Le procédé suivant l'invention consiste à mettre en oeuvre le dispositif suivant l'invention en sélectionnant l'une des au moins deux distances prédéfinies (100), puis en plaçant le sujet à la distance prédéfinie du dispositif de prise de vue (200) et en prenant une ou plusieurs prises de vue à cette distance (300). Dépendant de l'implémentation du dispositif d'acquisition, le placement du sujet (200) sera effectué en réalisant la superposition de motifs émis par le ou les pointeurs lumineux, en opérant un télémètre ou par d'autres moyens encore de mesure de distance.

Suivant une variante du procédé, l'opérateur itère entre placement du sujet avec les moyens de mesure de distance (200) et les prises de vue (300) à cette distance prédéfinie afin d'acquérir un certain nombre de vues du sujet. Un programme d'ordinateur détermine ensuite en trois dimensions les surfaces (400) pour chacune des vues collectées. Un programme d'ordinateur met ensuite en correspondance dans l'espace (500) les différentes surfaces 3D. Un programme d'ordinateur peut prendre ensuite les différentes surfaces 3D reconstruites et recalées et les rapiécer (ou « stitcher ») (600) en une seule représentation 3D du sujet.

Suivant une variante du procédé utilisant un dispositif ayant parmi ses différentes distances prédéfinies la possibilité de prendre des vues à un format approximatif A4 et à un format approximatif A3, l'utilisateur choisi au préalable (100) entre :
- utiliser la distance (A4) correspondant au format A4, positionner le sujet à cette distance (200) puis acquérir plusieurs vues du visage du sujet (300) à cette distance (A4) et ensuite un programme d'ordinateur effectue les étapes de reconstruction (400), de recalage (500) et de rapiéçage (600) de surfaces pour générer un modèle 3D du visage du sujet (710).
- utiliser la distance (A3) correspondant au format A3, positionner le sujet à cette distance (200) puis acquérir plusieurs vues du torse du sujet (300) à cette distance (A3) et ensuite un programme d'ordinateur effectue l'étape de reconstruction (400), de recalage (500) et de rapiéçage (600) de surfaces pour générer un modèle 3D du torse du sujet (720).

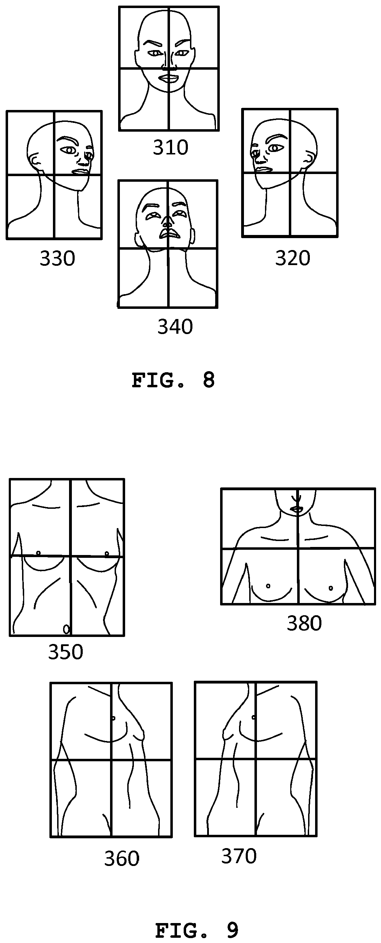

Il y aura dans ce cas un avantage à ce que pour la série de prises de vue à la distance (A4) du visage, les angles de prise de vue se rapprochent de ceux présentés dans la figure 8, c'est-à-dire une première vue prise de face (310), une seconde prise de vue se faisant d'un côté du visage et légèrement au-dessous (320), une troisième prise de vue se faisant de l'autre côté du visage et légèrement au-dessous (330) et la quatrième prise de vue, optionnelle, étant prise face au sujet mais de dessous (340).

Il y aura également un avantage à ce que pour la série de prises de vue à la distance (A3) du torse, les angles de prise de vue se rapprochent de ceux présentés dans la figure 9, c'est-à-dire une première prise de face (350), une seconde d'un côté et sur le dessous afin d'imager le pli infra-mammaire du sein (360) et une troisième de l'autre côté et sur le dessous afin d'imager le pli infra-mammaire de l'autre sein (370) et la quatrième prise de vue, optionnelle, se faisant de face et au-dessus en tournant l'appareil de 90° (380) pour imager le dessus des épaules.

Le dispositif et le procédé suivant l'invention sont particulièrement destinés à acquérir au moyen d'un seul dispositif de stéréophotogrammétrie portable des vues à au moins deux distances prédéfinies. Il est particulièrement utile pour acquérir des représentations sous forme de surfaces tridimensionnelles optimisées à la fois pour le visage et pour le torse du sujet, couvrant ainsi les principaux besoins des chirurgiens plasticiens et des dermatologues esthétiques au moyen d'un seul dispositif de prise de vue entièrement portable.

## Revendications

1. Dispositif pour la prise de vue en stéréophotogrammétrie de parties du corps, comprenant un appareil de prise de vue (1) et une optique double (2) munie de deux sous-optiques (2b,2c) permettant d'obtenir deux prises de vue simultanées selon chacune un angle différent, **caractérisé en ce qu'**il comprend un système de mesure de distance (34) configuré pour signaler l'utilisateur que la distance entre le dispositif et une partie du corps à reproduire correspond à une distance cible de prise de vue définie parmi au moins deux distances prédéfinies distinctes correspondant chacune à un format (A4, A3) de reproduction d'image différent.

2. Dispositif suivant la revendication 1, **caractérisé par le fait que** les au moins deux distances prédéfinies distinctes (A4,A3) sont incluses dans une région de l'espace correspondant à la profondeur de champ (6) du dit dispositif.

3. Dispositif suivant l'une quelconque des revendications 1 à 2, **caractérisé par le fait que** le système de mesure (34) dispose d'au moins deux paires de projecteurs lumineux (3b,3c) et (4b,4c), une première paire de projecteurs lumineux (3b,3c) étant configurée de sorte à converger à une première distance prédéfinie (A3) des au moins deux distances prédéfinies distinctes (A4,A3) et une deuxième paire de projecteurs lumineux (4b,4c) étant configurée de sorte à converger à une deuxième distance prédéfinie (A4) des au moins deux distances prédéfinies distinctes (A4,A3).

4. Dispositif suivant l'une quelconque des revendications 1 à 2, **caractérisé par le fait que** le système de mesure (34) dispose d'une paire de projecteurs lumineux (3b,3c) dont la distance de convergence peut être réglée à l'une ou à l'autre des au moins deux distances prédéfinies distinctes (A4,A3).

5. Dispositif suivant l'une quelconque des revendications 1 à 2, **caractérisé par le fait que** le système de mesure (34) dispose d'une paire de projecteurs lumineux (3b,3c) possédant des motifs définis de sorte que deux motifs projetés soient superposés à une distance prédéfinie (A4) et que deux autres motifs projetés soient superposés à une autre distance prédéfinie (A3).

6. Dispositif suivant l'une quelconque des revendications 1 à 5, **caractérisé par le fait que** le système de mesure (34) dispose d'un télémètre (10) permettant de régler la distance cible à l'une ou à l'autre parmi les au moins deux distances prédéfinies distinctes (A4,A3).

7. Dispositif suivant la revendication 6, **caractérisé par le fait que** le télémètre (10) est configuré pour émettre un signal visuel et/ou sonore (11) indiquant que la distance cible est atteinte.

8. Dispositif suivant l'une quelconque des revendications 1 à 7, **caractérisé par le fait qu'**il comporte un commutateur (5) permettant la sélection de l'une quelconque des au moins deux distances prédéfinies de prise de vue (A4,A3).

9. Dispositif suivant la revendication 8, comprenant un flash et un système d'adaptation de la puissance du flash de sorte que lorsque le commutateur (5) est réglé pour sélectionner la plus courte des au moins deux distances prédéfinies de prise de vue (A4,A3) la puissance du flash est réduite et que lorsque le commutateur (5) est réglé pour sélectionner la plus longue des au moins deux distances prédéfinies de prise de vue (A4,A3) la puissance du flash est augmentée.

10. Dispositif selon la revendication précédente, dans lequel le système d'adaptation de la puissance du flash est configuré pour que les intensités lumineuses des images d'une surface blanche prises à au moins deux des au moins deux distances prédéfinies de prise de vue soient identiques ou différentes de moins de 10%.

11. Dispositif suivant l'une quelconque les revendications 1 à 10, **caractérisé par le fait que** la plus petite (A4) des au moins deux distances prédéfinies distinctes de prise de vue correspond à un premier champ de prise de vue d'une surface plus petite d'au moins 25% en surface relativement à la surface du champ de prise de vue correspondant à une deuxième (A3) des au moins deux distances prédéfinies distinctes de prise de vue.

12. Dispositif suivant l'une quelconque des revendications 1 à 11, **caractérisé par le fait qu'**une des au moins deux distances prédéfinies de prise de vue correspond à un champ de prise de vue d'une surface d'un format normalisé A4 à plus ou moins 40% près en surface et/ou une autre des au moins deux distances prédéfinies de prise de vue correspond à un champ de prise de vue d'une surface d'un format normalisé A3 à plus ou moins 40% près en surface.

13. Dispositif suivant l'une quelconque des revendications 1 à 12, **caractérisé par le fait que** chaque sous-optique (2b,2c) de l'optique double (2) comprend trois lentilles, incluant dans l'ordre correspondant au sens du trajet des rayons lumineux entrants dans l'optique :
- une lentille plan-convexe (14b,14c),
- une lentille double-concave (15b,15c),
- et une lentille formant un doublet achromatique (16b,16c).

14. Procédé comprenant l' utilisation d'un dispositif selon l'une quelconque des revendications 1 à 13, comprenant les étapes suivantes: une sélection(100) de distance cible, un placement relatif (200) de l'appareil de prise de vues et d'un sujet à la distance cible au moyen du système de mesure (34), puis une réalisation (300) d'une ou plusieurs prises de vue à la distance cible, **caractérisée en ce que** la distance cible est l'une parmi au moins deux distances prédéfinies de prise de vue correspondant chacune à un format (A4,A3) de reproduction d'image différent et le système de mesure (34) signale que la distance entre le dispositif et une partie du corps à reproduire correspond à ladite distance cible.

15. Procédé suivant la revendication 14, comprenant un actionnement d'un commutateur (5) afin d'opérer la sélection (100) de l'une des au moins deux distances prédéfinies de prise de vue avant de procéder au placement (200) du sujet par rapport au dispositif.

16. Procédé suivant l'une quelconque des revendications 14 à 15, comprenant les étapes suivantes:
une réalisation de plusieurs prises de vue de paires stéréoscopiques à l'une des au moins deux distances de prise de vue prédéfinies d'un même sujet, puis une détermination en trois dimensions des surfaces correspondant aux différentes prises de vue de ce sujet (400), puis une mise en correspondance des différentes surfaces reconstruites (500) et enfin un rapiéçage des différentes surfaces mises en correspondance (600) en une seule représentation tridimensionnelle du sujet.

17. Procédé selon l'une des deux revendications précédentes, comprenant l'étape d'utilisation d'un produit programme d'ordinateur comprenant des instructions configurées pour, lorsqu'elles sont exécutées par au moins un processeur, réaliser les étapes de détermination, de la mise en correspondance du rapiéçage.

18. Procédé suivant l'une quelconque des revendications 14 à 17, **caractérisé par le fait que** l'utilisateur choisit (100) les étapes de:
- sélectionner comme distance cible la distance (A4) la plus proche d'un sujet parmi les au moins deux distances prédéfinies distinctes (A4, A3), puis placer relativement l'appareil de prise de vue et le sujet (200) à cette distance cible, puis effectuer plusieurs prises de vues à cette distance du visage du sujet suivant des angles différents (300);
- ou bien sélectionner comme distance cible une distance (A3) plus éloignée du sujet parmi les au moins deux distances prédéfinies distinctes (A4, A3), puis placer relativement l'appareil de prise de vue et le sujet à cette distance cible (200), puis effectuer plusieurs prises de vues à cette distance du torse du sujet suivant des angles différents (300).

## Patentansprüche

1. Vorrichtung zur Aufnahme von Teilen des Körpers in Stereofotogrammetrie, umfassend ein Aufnahmegerät (1) und eine Doppeloptik (2), die mit zwei Teiloptiken (2b, 2c) ausgestattet ist, die es ermöglichen, zwei zeitgleiche Aufnahmen, jede unter einem verschiedenen Winkel, zu erhalten, **dadurch gekennzeichnet, dass** sie ein Entfernungsmesssystem (34) umfasst, das dafür ausgebildet ist, dem Benutzer zu signalisieren, dass die Entfernung zwischen der Vorrichtung und einem Teil des Körpers, der reproduziert werden soll, einer definierten Aufnahme-Zielentfernung aus mindestens zwei vordefinierten unterschiedlichen Entfernungen entspricht, die jede einem verschiedenen Bildreproduktionsformat (A4, A3) entsprechen.

2. Vorrichtung nach Anspruch 1, **dadurch gekennzeichnet, dass** die mindestens zwei vordefinierten unterschiedlichen Entfernungen (A4, A3) in einem Bereich des Raums enthalten sind, der der Feldtiefe (6) der Vorrichtung entspricht.

3. Vorrichtung nach einem der Ansprüche 1 bis 2, **dadurch gekennzeichnet, dass** das Messsystem (34) über mindestens zwei Lichtprojektorenpaare (3b, 3c) und (4b, 4c) verfügt, wobei ein erstes Lichtprojektorenpaar (3b, 3c) derart ausgebildet ist, dass es in einer ersten vordefinierten Entfernung (A3) der mindestens zwei vordefinierten unterschiedlichen Entfernungen (A4, A3) konvergiert, und ein zweites Lichtprojektorenpaar (4b, 4c) derart ausgebildet ist, dass es in einer zweiten vordefinierten Entfernung (A4) der mindestens zwei vordefinierten unterschiedlichen Entfernungen (A4, A3) konvergiert.

4. Vorrichtung nach einem der Ansprüche 1 bis 2, **dadurch gekennzeichnet, dass** das Messsystem (34) über ein Lichtprojektorenpaar (3b, 3c) verfügt, dessen Konvergenzentfernung auf die eine oder auf die andere der mindestens zwei vordefinierten unterschiedlichen Entfernungen (A4, A3) eingestellt werden kann.

5. Vorrichtung nach einem der Ansprüche 1 bis 2, **dadurch gekennzeichnet, dass** das Messsystem (34) über ein Lichtprojektorenpaar (3b, 3c) verfügt, das definierte Muster besitzt, derart, dass zwei projizierte Muster in einer vordefinierten Entfernung (A4) überlagert werden, und dass zwei andere projizierte Muster in einer anderen vordefinierten Entfernung (A3) überlagert werden.

6. Vorrichtung nach einem der Ansprüche 1 bis 5, **dadurch gekennzeichnet, dass** das Messsystem (34) über einen Entfernungsmesser (10) verfügt, der es ermöglicht, die Zielentfernung auf die eine oder die andere aus den mindestens zwei vordefinierten unterschiedlichen Entfernungen (A4, A3) einzustellen.

7. Vorrichtung nach Anspruch 6, **dadurch gekennzeichnet, dass** der Entfernungsmesser (10) dafür ausgebildet ist, ein visuelles und/oder akustisches Signal (11) auszugeben, das anzeigt, dass die Zielentfernung erreicht ist.

8. Vorrichtung nach einem der Ansprüche 1 bis 7, **dadurch gekennzeichnet, dass** sie einen Schalter (5) umfasst, der das Auswählen von einer der mindestens zwei vordefinierten Aufnahmeentfernungen (A4, A3) ermöglicht.

9. Vorrichtung nach Anspruch 8, umfassend einen Blitz und ein System zum Anpassen der Leistung des Blitzes derart, dass wenn der Schalter (5) so eingestellt wird, dass die kürzere der mindestens zwei vordefinierten Aufnahmeentfernungen (A4, A3) ausgewählt wird, die Leistung des Blitzes reduziert wird, und dass wenn der Schalter (5) so eingestellt wird, dass die längere der mindestens zwei vordefinierten Aufnahmeentfernungen (A4, A3) ausgewählt wird, die Leistung des Blitzes erhöht wird.

10. Vorrichtung nach dem vorstehenden Anspruch, wobei das System zum Anpassen der Leistung des Blitzes so ausgebildet ist, dass die Lichtstärken der Bilder einer weißen Fläche, die in mindestens zwei der mindestens zwei vordefinierten Aufnahmeentfernungen aufgenommen werden, identisch oder um mindestens 10 % verschieden sind.

11. Vorrichtung nach einem der Ansprüche 1 bis 10, **dadurch gekennzeichnet, dass** die kleinere (A4) der mindestens zwei vordefinierten unterschiedlichen Aufnahmeentfernungen einem ersten Aufnahmefeld einer Fläche entspricht, die bezogen auf die Fläche des Aufnahmefeldes, das einer zweiten (A3) der mindestens zwei vordefinierten unterschiedlichen Aufnahmeentfernungen entspricht, flächenmäßig um mindestens 25 % kleiner ist.

12. Vorrichtung nach einem der Ansprüche 1 bis 11, **dadurch gekennzeichnet, dass** eine der mindestens zwei vordefinierten Aufnahmeentfernungen einem Aufnahmefeld einer Fläche eines A4-Standardformats flächenmäßig auf mehr oder weniger 40 % genau entspricht, und/oder eine andere der mindestens zwei vordefinierten Aufnahmeentfernungen einem Aufnahmefeld einer Fläche eines A3-Standardformats flächenmäßig auf mehr oder weniger 40 % genau entspricht.

13. Vorrichtung nach einem der Ansprüche 1 bis 12, **dadurch gekennzeichnet, dass** jede Teiloptik (2b, 2c) der Doppeloptik (2) drei Linsen umfasst, die in der Reihenfolge, die der Richtung der Bahn der in die Optik einfallenden Lichtstrahlen entspricht, enthalten:
- eine plankonvexe Linse (14b, 14c),
- eine doppelkonkave Linse (15b, 15c),
- und eine Linse, die ein achromatisches Dublett (16b, 16c) bildet.

14. Verfahren, das die Verwendung einer Vorrichtung nach einem der Ansprüche 1 bis 13 umfasst, umfassend die folgenden Schritte: ein Auswählen (100) der Zielentfernung, ein relatives Platzieren (200) des Aufnahmegerätes und eines Subjekts in der Zielentfernung mittels des Messsystems (34), anschließend ein Ausführen (300) von einer oder mehreren Aufnahmen in der Zielentfernung, **dadurch gekennzeichnet, dass** die Zielentfernung eine aus mindestens zwei vordefinierten Aufnahmeentfernungen ist, die jede einem verschiedenen Bildreproduktionsformat (A4, A3) entsprechen, und das Messsystem (34) signalisiert, dass die Entfernung zwischen der Vorrichtung und einem Teil des Körpers, der reproduziert werden soll, der Zielentfernung entspricht.

15. Verfahren nach Anspruch 14, das ein Betätigen eines Schalters (5) umfasst, um das Auswählen (100) von einer der mindestens zwei vordefinierten Aufnahmeentfernungen vorzunehmen, bevor mit dem Platzieren (200) des Subjekts im Verhältnis zur Vorrichtung fortgefahren wird.

16. Verfahren nach einem der Ansprüche 14 bis 15, umfassend die folgenden Schritte: ein Ausführen von mehreren Aufnahmen von stereoskopischen Paaren ein und desselben Subjekts in einer der mindestens zwei vordefinierten Aufnahmeentfernungen, anschließend ein Bestimmen, in drei Dimensionen, der Flächen, die den verschiedenen Aufnahmen dieses Subjekts entsprechen (400), anschließend ein Zuordnen der verschiedenen rekonstruierten Flächen (500) und schließlich ein Zusammenfügen der verschiedenen zugeordneten Flächen (600) zu einer einzigen dreidimensionalen Darstellung des Subjekts.

17. Verfahren nach einem der zwei vorstehenden Ansprüche, umfassend den Schritt der Verwendung eines Computerprogrammprodukts, das Anweisungen umfasst, die dafür ausgebildet sind, wenn sie von mindestens einem Prozessor ausgeführt werden, die Schritt des Bestimmens, des Zuordnens, des Zusammenfügens auszuführen.

18. Verfahren nach einem der Ansprüche 14 bis 17, **dadurch gekennzeichnet, dass** der Benutzer die Schritte wählt (100) des:
- Auswählens der Entfernung (A4) aus den mindestens zwei vordefinierten unterschiedlichen Entfernungen (A4, A3), die am nähesten an einem Subjekt ist, als Zielentfernung, anschließend relativen Platzierens des Aufnahmegerätes und des Subjekts (200) in dieser Zielentfernung, anschließend Anfertigens mehrerer Aufnahmen des Gesichtes des Subjekts in dieser Entfernung unter verschiedenen Winkeln (300);
- oder aber Auswählens einer Entfernung (A3) aus den mindestens zwei vordefinierten unterschiedlichen Entfernungen (A4, A3), die weiter vom Subjekt entfernt ist, als Zielentfernung, anschließend relativen Platzierens des Aufnahmegerätes und des Subjekts in dieser Zielentfernung (200), anschließend Anfertigens mehrerer Aufnahmen des Oberkörpers des Subjekts in dieser Entfernung unter verschiedenen Winkeln (300).

## Claims

1. Device for the stereophotogrammetry image acquisition of body parts, comprising a camera body (1) and a double optics (2) equipped with two sub-optics (2b,2c) enabling the acquisition of two simultaneous views each according to a different angle, wherein the device is comprising a distance measuring system (34) configured to signal to a user that the distance between the device and a body part to represent corresponds with a targeted shooting distance chosen between at least two distinct pre-defined distances each corresponding to a distinct image representation format (A4,A3).

2. Device according to claim 1, wherein the at least two distinct pre-defined distances (A4,A3) are including in a region of the space corresponding to the depth of field (6) of said device.

3. Device according to any of the claims 1 to 2, wherein the distance measuring system (34) is equipped with at least two pairs of light beamers (3b,3c) and (4b, 4c), with a first pair of light beamers (3b,3c) configured to converge at a first pre-defined distance (A3) amongst the at least two distinct pre-defined distances (A4,A3) and a second pair of light beamers (4b, 4c) configured to converge at a second pre-defined distance (A4) amongst the at least two distinct pre-defined distances (A4,A3).

4. Device according to any of the claims 1 to 2, wherein the distance measuring system (34) is equipped with a pair of light beamers (3b,3c) which the convergence distance can be set to one or the other of the at least two distinct pre-defined distances (A4,A3).

5. Device according to any of the claims 1 to 2, wherein the distance measurement system (34) is equipped with a pair of light beamers (3b,3c) including patterns defined such that two projected patterns are superimposed at a pre-defined distance (A4) and that two other projected patterns are superimposed at another pre-defined distance (A3).

6. Device according to any of the claims 1 to 5, wherein the distance measurement system (34) is equipped with a telemeter (10) enabling to set the targeted distance to one or the other amongst the at least two distinct pre-defined distances (A4,A3).

7. Device according to claim 6, wherein the telemeter (10) is configured to emit a visual and/or audio signal (11) indicating that the targeted distance is reached.

8. Device according to any of the claims 1 to 7, comprising a switch (5) enabling selecting anyone of the at least two pre-defined distance for picture taking (A4,A3).

9. Device according to claim 8, comprising a flash and a system to adapt the flash power such that when the switch (5) is set in order to select the shortest of the at least two pre-defined distances for picture taking (A4,A3) the power of the flash is reduced and when the switch (5) is set in order to select the longest of the at least two pre-defined distances for picture taking (A4,A3) the power of the flash is augmented.

10. Device according to the previous claim, wherein the system to adapt the power of the flash is configured such that the light intensity of the respective images of a white surface taken at at least two amongst the at least two pre-defined distances for picture taking are identical or differ from less than 10%.

11. Device according to any of the claims 1 to 10, wherein the shortest (A4) of the at least two distinct pre-defined distances for picture taking corresponds with a field of view having a surface at least 25% of its surface smaller than the surface of the field of view corresponding to a second (A3) amongst the at least two distinct pre-defined distances for picture taking.

12. Device according to any of the claims 1 to 11, wherein one of the at least two pre-defined distance for picture taking corresponds with a field of view with the surface area of an A4 normalized format plus or minus 40% in the surface area and or another one of the at least two pre-defined distances of picture taking correspond with a field of view with the surface area if an A3 normalized format plus or minus 40% in the surface area.

13. Device according to any of the claims 1 to 12, wherein each sub-optics (2b,2c) of the double optics (2) comprises three lenses, including in the order corresponding to the light rays path entering the optics:
- a plano-convex lens (14b,14c),
- a double-concave lens (15b,15c),
- and an achromatic doublet lens (16b,16c).

14. A method including the use of a device according to any of the claims 1 to 13, including the following steps: selecting (100) a targeted distance, placing relatively (200) the image acquisition system and a subject at the targeted distance using the distance measurement system (34), then taking (300) one or several pictures at the targeted distance, wherein the targeted distance is one amongst at least two pre-defined distances for picture taking each corresponding to distinct image representation formats (A4,A3) and that the distance measurement system (34) signals that the distance between the device a body part to represent corresponds with the said targeted distance.

15. A method according to claim 14, wherein a switch (5) is operated in order to select (100) one amongst at least two pre-defined distances for picture taking before placing (200) the subject relative to the device.

16. A method according to any of the claims 14 to 15, wherein the following steps are included: performance of several acquisitions of stereophotogrammetry pairs according to one out of at least two distinct pre-defined distances for picture taking of the same subject, then determining in three dimensions the surfaces corresponding with the different view orientations of this subject (400), and then the matching of the different reconstructed surfaces (500) and finally a stitching of the different matched surfaces (600) into a single three-dimensional representation of the subject.

17. Method according to any of the two above-mentioned claims, comprising the step of using a computer program product comprising instructions of program code for carrying out the steps of determining, matching and stitching.

18. Method according to any of the claims 14 to 17, wherein the user is selecting (100) the steps of:
- Selecting as targeted distance the distance (A4) closest to a subject from one amongst the at least two distinct pre-defined distances (A4, A3), then placing relatively the acquisition device and the subject (200) at this targeted distance, and then taking several acquisitions at that distance to the face of the subject according to different angles (300);
- Or selecting as targeted distance a distance (A3) further away to the subject amongst the at least two distinct pre-defined distances (A4, A3), then placing relatively the acquisition device and the subject (200) at this targeted distance, and then taking several acquisitions at that distance to the torso of the subject according to different angles (300).
